Europäisches Patentamt

European Patent Office

Office européen des brevets

(11) Publication number: **0 294 337**
A1

# (12) EUROPEAN PATENT APPLICATION

(21) Application number: 88830154.6

(22) Date of filing: 12.04.88

(51) Int. Cl.⁴: **B 29 C 47/04**
B 29 C 47/12, B 60 R 13/06

(30) Priority: 11.05.87 IT 6740687

(43) Date of publication of application:
07.12.88 Bulletin 88/49

(84) Designated Contracting States:
BE DE ES FR GB IT NL SE

(71) Applicant: S.A.I.A.G. S.p.A.
Via Torino 140
I-10073 Cirie'Torino (IT)

(72) Inventor: Azzola, Roberto
Corso Peschiera 265
I-10141 Torino (IT)

(74) Representative: Buzzi, Franco et al
c/o Jacobacci-Casetta & Perani S.p.A. Via Alfieri, 17
I-10121 Torino (IT)

The title of the invention has been amended (Guidelines for Examination in the EPO, A-III, 7.3).

(54) **Variable-rigidity extrudate obtained by continuous extrusion, and method and apparatus for producing this extrusion.**

㊲ A variable-rigidity extrusion (A) is produced by a continuous extrusion process consisting of the provision of an extrusion head (1) with first, second and third successive extrusion dies (3, 4, 5) and of the continuous supply to these extrusion dies of respective flows of elastomeric materials, of which that directed to the first extrusion die is harder than that directed to the second die. Passage through the first and second extrusion dies is permitted and inhibited alternately for predetermined time intervals and the flow of elastomeric material directed to the alternately inhibited extrusion die is recycled.

FIG. 1

FIG. 2

## Description

**Variable-rigidity extrusion obtained by continuous extrusion, and a method and equipment for producing this extrusion**

The present invention relates in general to extrusions of elastomeric material intended, in particular, to constitute the weather strips for sealing and guiding vertically-movable window panes of motor-vehicle windows.

As is known, such weather strips include three successive longitudinal portions for defining the rearward side, the upper side and the forward side respectively of the window and have a substantially channel-shaped section with a base part and side walls bearing sealing and guiding flanges, the rigidity of the base part and the side walls of the first of the three portions being greater than that of the second and third portions. The purpose of the greater rigidity of the first portion is to enable it to perform the function of guiding the rear edge of the window pane during vertical movements, in addition to the function of sealing the window.

According to the prior art, such weather strips are conventionally produced by the extrusion of a soft, elastomeric material, that is with a rigidity corresponding to that required for the second and third portions of the weather strip, and the subsequent stiffening of the first portion of the weather strip by the addition of a rigid guide element. This rigid element, which may be of metal or plastics material, is applied to the base part and to the side walls of the weatherstrip by integral moulding therewith, by mechanical fixing or by glueing. This involves relatively long and complex operations as well as considerable production problems.

The object of the present invention is to avoid these problems and this object is achieved by means of an extrusion of the type defined above, having a constant cross-section portion with longitudinally-variable rigidity, characterized in that it is produced in a single operation of extrusion in which the said constant cross-section portion with longitudinally-variable rigidity is generated by at least two continuous flows of elastomeric materials of different compositions alternately used.

The method for the production of the extrusion according to the invention is characterized in that is consists of: the provision of an extrusion head with first, second and third successive extrusion dies, of which the first two have profiles corresponding to that of the base part and the side walls and the third has a profile corresponding to that of the finished weatherstrip; the continuous supply to these extrusion dies of respective flows of elastomeric material, of which that directed to the first extrusion die is harder than that directed to the second die; and the alternate enabling and inhibition of passage through the first and second extrusion dies for predetermined time intervals depending on the length of the first, second and third portions of the weather strip, the flow of elastomeric material directed to the alternately inhibited extrusion die being recycled.

By virtue of this concept, the weather strip is produced in a single operation without the need for subsequent application of an additional stiffening element.

A further subject of the invention is equipment for carrying out the method, whose characteristics will become clear in the detailed description which follows with reference to the appended drawings, provided purely by way of non-limiting example, in which:

Figure 1 is a perspective view of part of an extrusion of elastomeric material produced by means of the method and equipment according to the invention,

Figure 2 is an axially-sectioned schematic view of the equipment according to the invention,

Figure 3 is an elevational view taken on the arrow III of Figure 1,

Figure 4 is an elevational view taken on the line IV of Figure 1,

Figure 5 is an elevational view taken on the arrow V of Figure 1,

Figure 6 is an elevational view taken on the arrow VI of Figure 1,

Figure 7 is an elevational view taken on the arrow VII of Figure 1, an

Figure 8 is a schematic elevational view of the weather strip in its installed arrangement of use.

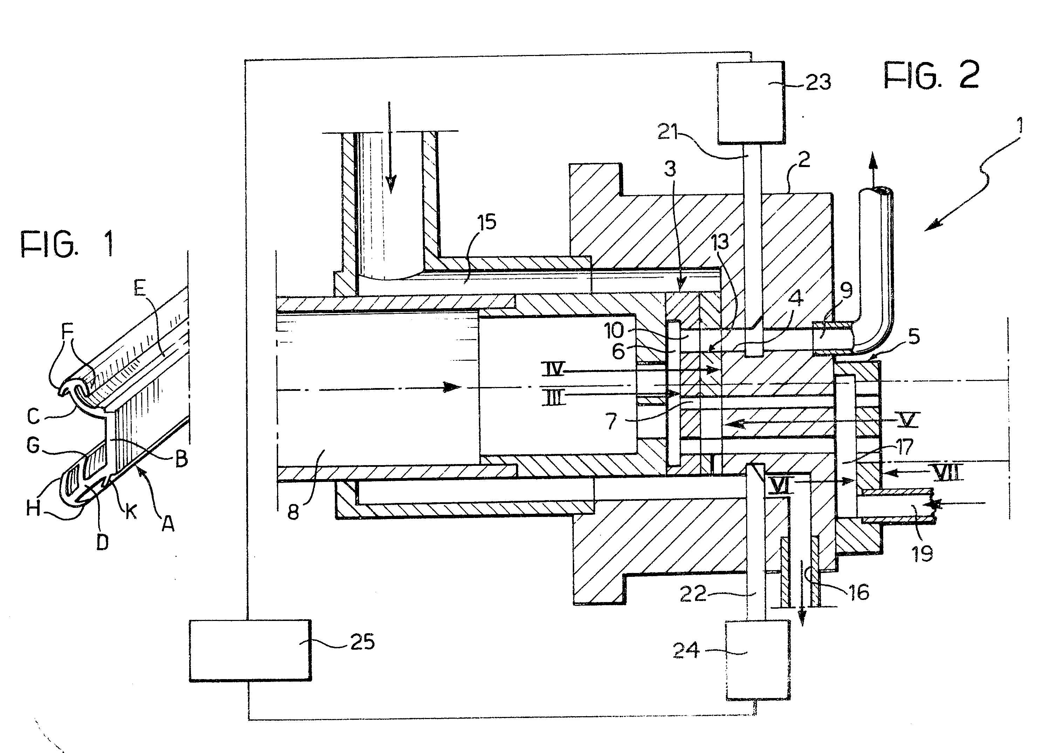

With reference first to Figure 1, an extrusion of elastomeric material is indicated A and is intended to constitute a weather strip for sealing and guiding a vertically-movable window pane for motor vehicle windows or other applications. The extrusion A has a constant, substantially channel-shaped cross-section, with a flat base part B and two side walls C, D flared slightly outwardly. The side wall C has a longitudinal rib E on its outer face and two backwardly-curved longitudinal flanges F along its free edge. The other side wall D has an inclined flange G on its inside face and two backwardly-curved longitudinal flanges H along its free edge. There is also a further longitudinal flange K projecting from the zone of connection of the base part B to the side wall D.

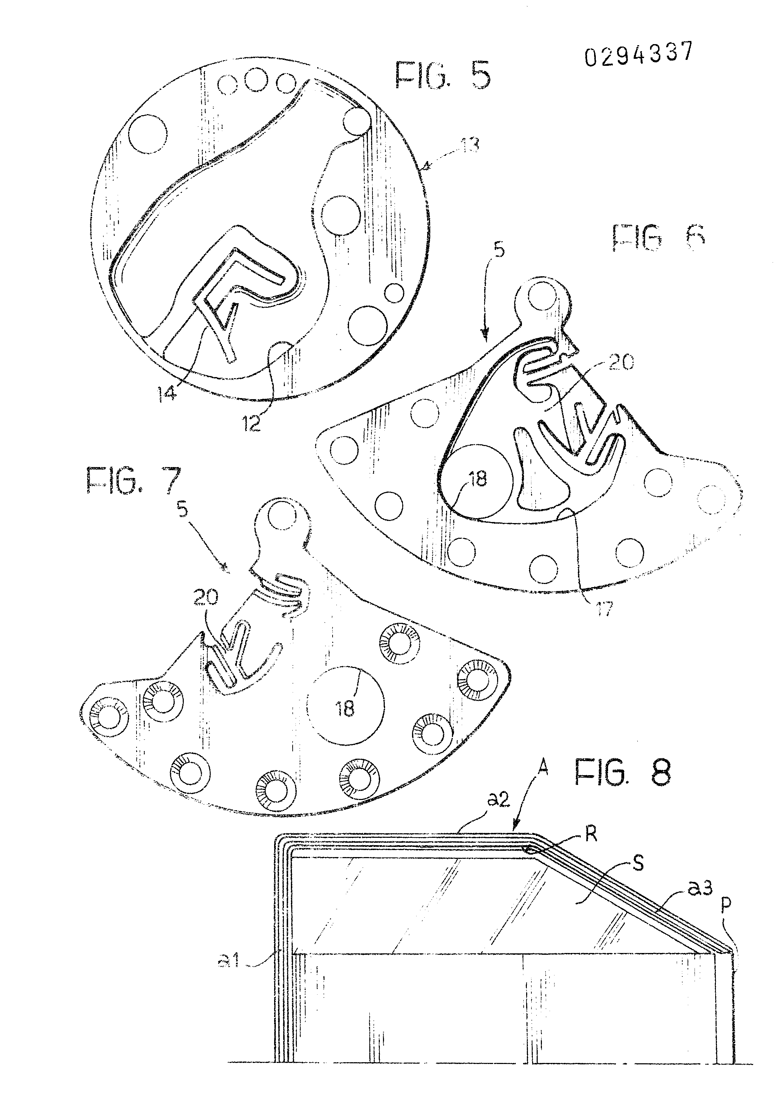

Figure 8 illustrates, by way of example, the way in which the extrusion A is applied to a side door P of a motor car with an upper window aperture R in which a window pane S is movable vertically. The extrusion A is applied to the door P so as to form a first portion $a_1$ extending along the rearward side of the window aperture R, and downwardly of this rear side, a second portion $a_2$ positioned along the upper side of the window R and a third portion $a_3$ situated along the forward side of the window R. Whilst the second portion $a_2$ and third portion $a_3$ perform solely the function of sealing the corresponding edges of the pane S, the first portion $a_1$, in addition to the sealing function, also has the function of guiding and retaining the rearward edge of the pane S (provided, in known manner, with a conventional sliding block, not illustrated), during its downward and upward movements. In order to perform this function, the portion $a_1$ needs to have a relatively high rigidity, in any case greater than that of the portions $a_2$, $a_3$.

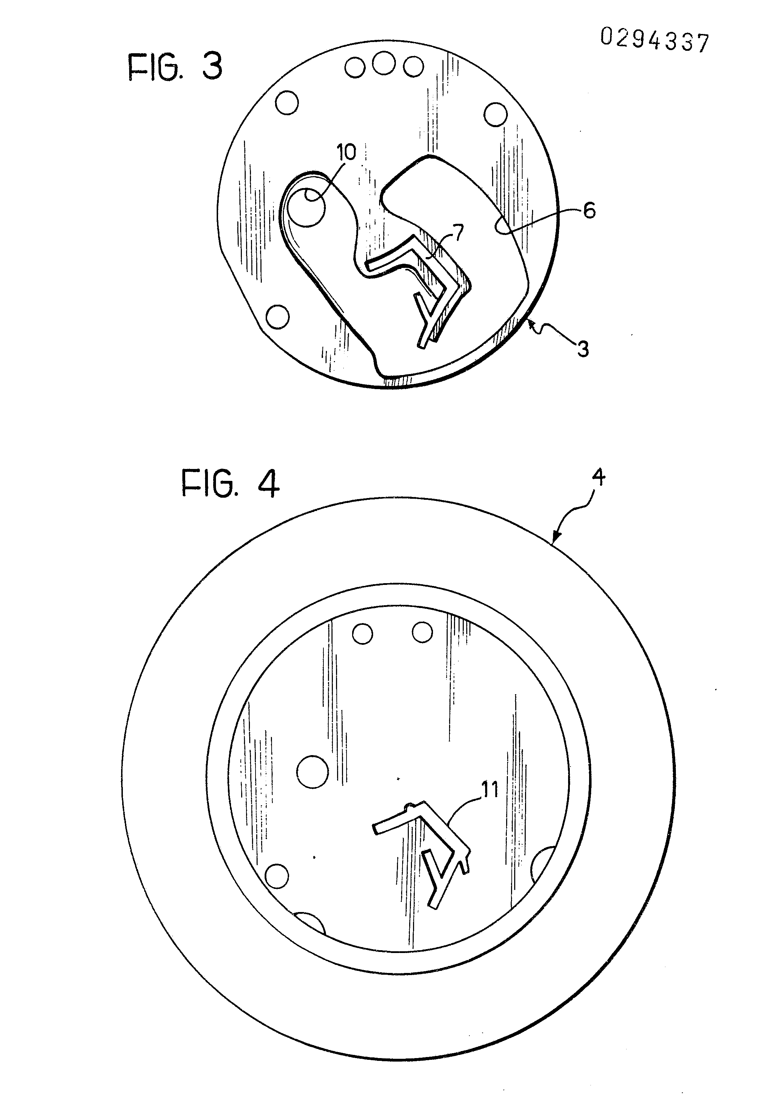

According to the invention, this difference in rigidity is achieved by means of a method of continuous extrusion which can be carried out by the equipment generally indicated 1 in Figure 2. In practice, this consists of an extrusion head including a hollow supporting body 2 in which three successive extrusion dies indicated 3, 4 and 5 respectively are inserted in axial alignment.

The extrusion die 3, illustrated in detail in Figure 3, consists of a disc having a compensation chamber 6 in one face communicating with an extrusion orifice 7 with a profile corresponding to that of the base part B and the side walls C, D with the flange G of the extrusion A. The compensation chamber 6, which, as will be seen below, is supplied through a central passage 8 of the head 1, also communicated with a recycle conduit 9 through a through-hole 10 in the die 3.

The second extrusion die 4, illustrated in detail in Figure 4, also has an extrusion orifice 11 similar to the orifice 7 of the die 3. This orifice 11 communicates with a compensation chamber 12 of an intermediate spacer element 13 illustrated in greater detail in Figure 5 and interposed between the dies 3 and 4. This spacer element 13 has a passage 14 similar to the orifices 7 and 11 and aligned therewith. The compensation chamber 12 communicates with an annular passage 15 which coaxially surrounds the central passage 8 and through which the second die 4 is supplied in the manner clarified below. The annular passage 15 is connected to a recycle conduit 16.

The third extrusion die 5, illustrated in greater detail in Figures 6 and 7, has an expansion chamber 17 facing the second extrusion die 4 and communicating through a hole 18 with a supply passage 19. The chamber 17 communicates with an extrusion orifice 20, having a shape corresponding to that of the finished extrusion A, that is with the addition, with respect to the orifices 7, 11 and 14, of apertures corresponding to the flanges F, H and K.

Reference numerals 21 and 22 indicate two obturators movable radially through the body 2 and associated with the recycle conduit 9 and the recycle conduit 16 respectively. The two obturators 21 and 22 are movable between a retracted, open position, in which they open the passages through the respective conduits 9 and 16, and an advanced closed position, in which they obstruct these conduits. The movements of the two obturators 21 and 22 are driven by means of respective hydraulic actuators 23, 24 controlled by a programmable electronic control unit 25. The unit 25 is programmed to operate the actuators 23 and 24 so as to open and close the obturators 21 and 22 alternately. In other words, when the obturator 21 is in the closed position, the other obturator 22 is in the open position and vice versa.

In operation, the passages 8, 15 and 19 in the extrusion head 1 are supplied continuously with respective flows of elastomeric materials directed to the first die 3, the second die 4 and the third die 5, respectively. The elastomeric material supplied though the central passage 8 to the first die 3 has greater hardness (for example of the order of 60 Shore A) than that (for example of the order of 50 Shore D) of the elastomeric material supplied through the passage 15 to the second extrusion die 4. The elastomeric material sent to the third extrusion die 5 through the passage 19 has a hardness less than or equal to that of the elastomeric material supplied to the second die 4.

By means of the electronic unit 25 and the actuators 23, 24 with their obturators 21, 22, it is possible to cause selectively extrusion of the more rigid elastomeric material through the die 3, while at the same time preventing extrusion of the less rigid elastomeric material through the die 4, and vice versa. In the first case, the obturator 21 is in the closed position so as to obstruct the recycle conduit 9 whilst the obturator 22 is kept in the open position. In this situation, the more rigid elastomeric material coming from the central passage 8 is drawn through the orifice 7 of the first die 3, forming the base part B with the walls C, D and G of the weather strip A and reaches the third die 5 through the orifice 14 of the intermediate element 13 and through the orifice 11 of the second die 4. The elastomeric material coming from the passage 19 is drawn through the orifice 20 of the die 5 so as to complete the weather strip A by the formation of the flanges F, H and K. The elastomeric material coming from the annular passage 15, on the other hand, enters the conduit 16 and is thus recycled.

The duration of this phase is controlled by the unit 25 in dependence on the length of the first portion $a_1$ of the weather strip A. This length can be varied according to the requirements of use of the weather strip A, and the duration of the phase described above is therefore programmable by means of the unit 25.

At the end of this phase, the unit 25 switches the actuators 23 and 24 and consequently opens the obturator 21 and closes the obturator 22. As a result of this switching, the supply of elastomeric material coming from the annular passage 15 to the second extrusion die 4 is permitted and the supply of elastomeric material coming from the central passage 8 to the first extrusion die 3 is simultaneously prevented. The more rigid elastomeric material is thus recycled through the conduit 9 whilst the less rigid material is drawn through the orifice 11 of the die 4 and reaches the third die 5, where the extrusion of the weather strip A is completed. This phase continues until completion of the portions $a_2$ and $a_3$, after which the unit 25 once again switches the actuators 23 and 24 and the cycle is repeated exactly as described above.

It is clear from the above that the extrusion head according to the invention enables a variable-rigidity weather strip A, ready for use, to be produced by continuous extrusion, without the need for further supplementary operation.

Naturally, the shapes of the extrusion and the details of construction of the extrusion equipment can be varied widely with respect to those described and illustrated, without thereby departing from the scope of the present invention.

## Claims

1. An extrusion of elastomeric material, intended in particular to constitute a weather strip (A) for sealing and guiding a vertically-movable window pane (S) for motor-vehicle windows (R), having a constant cross-section portion with longitudinally-variable rigidity (B,C,D), characterised in that it is produced in a single operation of continuous extrusion in which the said constant cross-section portion with longitudinally-variable rigidity (B,C,D) is generated by at least two continuous flows of elastomeric materials of different composition alternately used.

2. An extrusion according to Claim 1, including three successive longitudinal portions ($a_1$, $a_2$, $a_3$) intended to define the rearward side, the upper side and the forward side respectively of the window (R) and having a constant, substantially channel-shaped section with a base part (B) and side walls (C, D) bearing sealing and guiding flanges (F, H, G, K) the base part (B) and the side walls (C, D) of the first of the three portions ($a_1$) being more rigid than the corresponding parts of the second and third portions ($a_2$, $a_3$), characterised in that it is produced by: the provision of an extrusion head (1) having first, second and third successive extrusion dies (3, 4, 5) of which the first two have profiles corresponding to that of the base part (B) and the side walls (C, D) and the third has a profile corresponding to that of the finished weather strip (A); the continuous supply to these extrusion dies of respective flows of elastomeric materials, of which that directed to the first die (3) is harder than that directed to the second die (4); and the alternate enabling and prevention of passage through the first and second extrusion dies (3, 4) for predetermined time intervals depending on the length of the first, second and third portions of the weather strip ($a_1$, $a_2$, $a_3$); and the recycling of the flow of elastomeric material directed to the alternately inhibited extrusion die.

3. A method for the production of a variable-rigidity extrusion of elastomeric material, in particular a weather strip (A) for sealing and guiding a vertically-movable window pane (S) for motor-vehicle windows (R), including three successive longitudinal portions ($a_1$, $a_2$, $a_3$) intended to define the rearward side, the upper side and the forward side respectively of the window (R) and having a constant, substantially channel-shaped section with a base part (B) and side walls (C, D) bearing sealing and guiding flanges (F, H, G, K) the rigidity of the base part (B) and the side walls (C, D) of the first of the three portions ($a_1$) being greater than that of the corresponding parts of the second and third portions ($a_2$, $a_3$) characterised in that it consists of: the provision of an extrusion head (1) having first, second and third successive extrusion dies (3, 4, 5) of which the first two have profiles corresponding to that of the base part (B) and of the side walls (C, D) and the third has a profile corresponding to that of the finished weather strip (A); the continuous supply to these extrusion dies of respective flows of elastomeric materials of which that directed to the first die (3) is harder than that directed to the second die (4); and the alternate enabling and prevention of passage through the first and second extrusion dies (3, 4) for predetermined time intervals depending on the length of the first, second and third portions ($a_1$, $a_2$, $a_3$) of the weather strip, the flow of elastomeric material directed to the alternately inhibited extrusion die being recycled.

4. Equipment for producing, by means of continuous extrusion, a variable-rigidity extrusion of elastomeric material, particularly a weather strip (A) for sealing and guiding a vertically-movable window pane (S) for motor-vehicle windows (R), including three successive longitudinal portions ($a_1$, $a_2$, $a_3$) intended to define the rearward side, the upper side and the forward side respectively of the window (R) and having a substantially channel-shaped section with a base part (B) and side walls (C, D) bearing sealing and guiding flanges (F, G, H, K), the rigidity of the base part and side walls of the first of the three portions ($a_1$) being greater than that of the corresponding parts of the second and third portions ($a_2$, $a_3$), characterised in that it comprises an extrusion head (1), including:

- first, second and third successive extrusion dies (3, 4, 5) of which the first two have profiles corresponding to that of the base part (B) and the side walls (C, D) and the third has a profile corresponding to that of the finished weather strip (A),

- means for the continuous supply to the extrusion dies (3, 4, 5) of respective flows of elastomeric materials, of which that directed to the first die (3) is harder that that directed to the second die (4),

- means for the alternate enabling and prevention of passage through the first and second extrusion dies (3, 4) for predetermined time intervals depending on the length of the first, second and third portions of the weather strip, and

- recycling means for recycling the flow of elastomeric material directed to the alternately inhibited extrusion die.

5. Equipment according to Claim 4, characterised in that the extrusion head (1) has:

- a central passage (8) communicating with the first extrusion die (3) and with a recycle conduit (9) having an associated first obturator (21) movable between an open position and a closed position,

- an annular passage (15) surrounding the central passage (8) and communicating with the second extrusion die (4) and with a recycle conduit (16) having an associated second obturator (22), movable between an open position and a closed position,

- a pair of motorised actuators (23, 24) for controlling the first and second obturators (21, 22) and

- programmable electronic means for controlling the actuators (23, 24) to achieve alternately the opening of one obturator and the closing of the other obturator and vice versa.

0294337

FIG. 2

FIG. 1

0294337

FIG. 3

FIG. 4

FIG. 5

0294337

FIG. 6

FIG. 7

FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 834 842 (DRAFTEX DEVELOPMENT AG)<br>* Claim 1 * | 1 | B 29 C 47/04<br>B 29 C 47/12<br>B 60 R 13/06 |
| A | FR-A-2 165 229 (DRAFTEX)<br>* Claims 1,13; figure 1 * | 1,2 | |
| A | FR-A-2 468 717 (STANDARD PRODUCTS INDSTRIAL SA)<br>* Claims 1,5; figure 1 * | 1,2 | |
| A | PATENT ABSTRACTS OF JAPAN, vol. 9, no. 168 (M-396)[1891], 13th July 1985; & JP-A-60 42 136 (NISSAN JIDOSHA K.K.) 06-03-1985 | 1,2 | |
| A | US-A-4 662 404 (H.H. LEVEEN et al.)<br>* Whole document * | 3-5 | |
| A | US-A-3 724 985 (N.W. BURLIS et al.)<br>* Column 1, lines 8-12; claims; figures 1,2 * | 3-5 | TECHNICAL FIELDS SEARCHED (Int. Cl.4) |
| A | US-A-3 752 617 (N.W. BURLIS et al.)<br>* Abstract; figures * | 3-5 | B 29 C<br>B 60 R |
| A | DE-A-3 439 285 (EXCELL CORP.)<br>* Figures * | 3-5 | |
| A | DE-B-1 261 657 (KAUTEX-WERK REINOLD HAGEN)<br>* Figures * | 3-5 | |
| A | US-A-4 276 250 (F.E. SATCHELL et al.)<br>* Figures *<br>-/- | 3-5 | |

The present search report has been drawn up for all claims

| Place of search | Date of completion of the search | Examiner |
|---|---|---|
| THE HAGUE | 21-07-1988 | BELIBEL C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

Application Number

EP 88 83 0154

European Patent Office

EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 081 093 (CONTINENTAL GUMMI-WERKE AG) * Figure 3 * | 3,4 | |
| A | FR-A-2 535 513 (P.H.A. BRETEGNIER) * Figures 2,3 * | 3-5 | |

TECHNICAL FIELDS SEARCHED (Int. Cl.4)

The present search report has been drawn up for all claims

| Place of search | Date of completion of the search | Examiner |
|---|---|---|
| THE HAGUE | 21-07-1988 | BELIBEL C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)